# EUROPEAN PATENT SPECIFICATION

(11) **EP 1 439 618 B1**
(45) Date of publication and mention of the grant of the patent: **17.10.2007**
(21) Application number: 03029843.4
(22) Date of filing: 24.12.2003
(51) Int. Cl.: H01S 3/081, H01S 3/0941

(54) **Laserdiode pumped compact solid state laser with a folded resonator**
Diodenlaser gepumpter, kompakter Festkörperlaser mit einem gefalteten Resonator
Laser compact à matériau amplificateur solide et à pompage par diode laser avec un résonateur replié

(30) Priority: 25.12.2002 JP 2002374995
(43) Date of publication of application: 21.07.2004
(73) Proprietor: Laserfront Technologies, Inc., Kanagawa 229-1198 (JP)
(72) Inventor: Tsunekane, Masaki, Minato-ku, Tokyo (JP); Mukaihara, Katsuji, Minato-ku, Tokyo (JP)
(74) Representative: Glawe, Delfs, Moll

(56) References cited:
- EP-A- 0 467 298
- EP-A- 1 128 505
- US-A- 4 910 746
- US-A- 5 696 786
- US-A- 5 867 519
- US-A- 6 101 208

## Description

### BACKGROUND OF THE INVENTION

### (a) Field of the Invention

The present invention relates to a laser-pumped solid laser device and, more particularly, to a laser-pumped solid laser device including a plurality of solid laser rods arranged in series.

### (b) Description of the Related Art

A semiconductor-laser-pumped solid laser device (referred to as simply "solid laser device " hereinafter) having a high output power includes a plurality of solid laser rods arranged linearly along the optical axis of the solid laser device to obtain a linear optical path. Both the ends of the optical path are provided with respective specified mirrors to obtain a lasing function (refer to JP-A-2002-50813, for example).

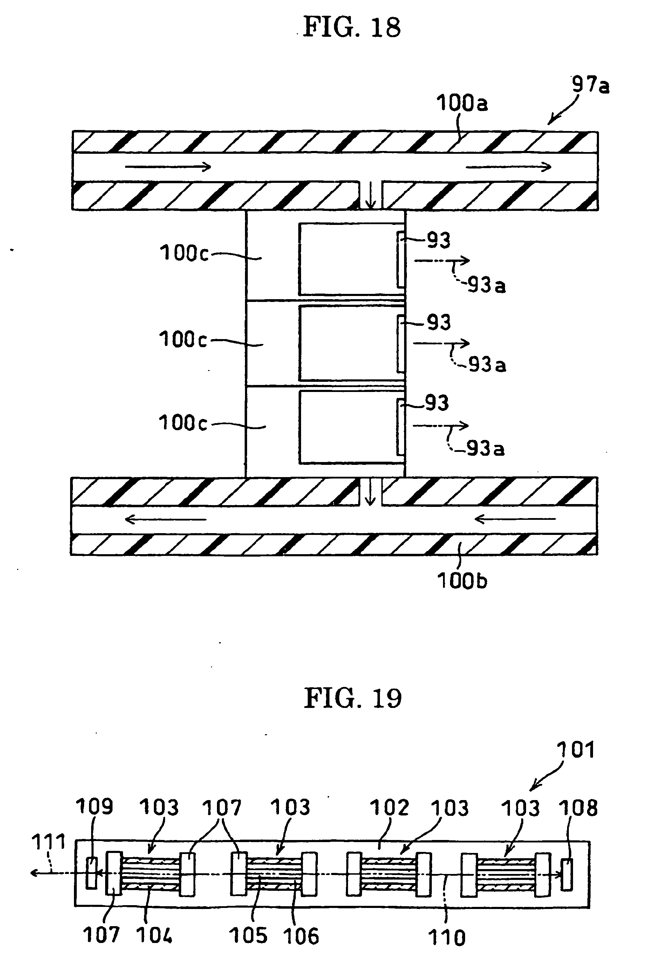

Fig. 19 shows a conventional solid laser device in a top plan view thereof. The conventional solid laser device generally designated by numeral 101 includes a base 102, on which four condensers 103 are mounted in a group. The four condensers 103 are arranged linearly along the longitudinal direction thereof to be optically coupled together in series. Each condenser 13 includes a glass tube 104 receiving therein a solid laser rod 105, and a pair of rod supports 107. The longitudinal ends of the glass tubes 104 and the solid laser rods 105 are supported by the rod supports 107. Cooling water 106 is supplied to the gap between the glass tube 104 and the solid laser rod 105.

A total-reflection mirror 108 is provided at one longitudinal end of the group of the four condensers, whereas a partial-reflection mirror 109 is provided at the other longitudinal end. Thus, the total-reflection mirror 108, the group of four condensers 103 and the partial-reflection mirror 109 are arranged linearly in this order. A plurality of semiconductor laser diodes (not shown) are disposed in the vicinity of each condenser 103.

In operation, the semiconductor laser diodes (LD devices) provide pumping laser to the respective solid laser rods 105, which are pumped thereby to form an optical path 110 between the partial-reflection mirror 108 and the total-reflection mirror 109 to emit a laser beam 111 through the partial-reflection mirror 109.

The conventional solid laser device 101 has some problems as described hereinafter. A large number of condensers 103, if provided for achieving a higher output power, involve a larger length of the solid laser device 101, resulting in a larger dimension of the laser apparatus receiving therein the solid laser device 101. In addition, the larger length of the solid laser device 101 involves an insufficient rigidity of the base 102. If the base 102 is bent due to a vibration in association with the mass of the condensers 103 and/or extension due to the ambient temperature, the alignment of the optical axis for the laser beam 111 may deviate from the optimum conditions, thereby incurring a reduction of the laser output power and deviation of the emission axis. The latter will incur a misalignment of the optical axis between the solid laser device 101 and the other optical system disposed at the emission side of the solid laser device 101.

The optical axis of the conventional solid laser device 101 is generally aligned by adjusting the position of each rod support 107 to move or shift the condenser 103 as a whole. This makes it difficult to obtain a fine adjustment of the optical axis.

Another technique for the alignment of the optical axis is such that a probe light is incident onto the solid laser rod 105 in each condenser 103, the probe light passed by the solid laser rod 105 is projected onto a screen, and then the condenser 103 is moved so that the projected probe light is positioned at a specified position on the screen. This technique allows a finer adjustment if a sufficient distance is obtained between the condenser 103 and the screen. However, the linear arrangement of the plurality of condensers 103 limits the distance between adjacent condensers 103, which fact hinders a sufficient distance from being obtained between the condenser 103 and the screen during the adjustment. Thus, a finer alignment of the optical axis is not obtained after installing the condensers 103 in the solid laser device 101. A strictly fine adjustment can be obtained only by removing the condensers 103 from the solid laser device 101 and adjusting the condensers 103 separately before re-installing the condenser 103 in the solid laser device 101 one by one. This procedure increases the time length needed for alignment of the optical axis for the solid laser device.

Patent Publication JP-A-1989-86580 describes another solid laser device wherein four solid laser rods are arranged along the respective sides of a square. The laser beam emitted from one of the solid laser rods is reflected by a mirror at an incidence angle of 45 degrees to be incident onto another of the solid laser rods disposed on the adjacent side of the square, thereby forming a square optical path of the solid laser device.

Patent Publication JP-A-1996-250797 describes another solid laser device wherein a plurality of groups of condensers are arranged parallel to one another, each group including a plurality of linearly arranged condensers. The adjacent groups are optically coupled by a mirror assembly including two mirrors and a single lens.

The techniques described in the two patent publications may solve the above problem of the conventional solid laser device to obtain a larger distance between the condenser and the screen during the adjustment of the optical axis.

However, the solid laser device described in JP-A-1989-86580 has a wasted space between the condensers disposed on opposing sides of the square, thereby increasing the dimensions of the solid laser device and also reducing the rigidity of the base.

In addition, in the solid laser device described in the publication, there is a problem in that the single mirror disposed between adjacent condensers may be damaged by the laser beam. More specifically, in general, the solid laser rod has a temperature distribution of axial symmetry due to a thermal lens effect thereof, wherein the internal temperature within the solid laser rod is highest at the center of the rod and decreases along the radially outward direction. This temperature distribution provides the solid laser rod with a refractive index distribution of axial symmetry and thus a lens function. As a result, the laser beam emitted by the solid laser rod is once converged and then diverged. For improving the optical efficiency, the diameter of the laser beam at the emission end of the solid laser rod should be equal to the diameter of the laser beam at the receiving end of the adjacent solid laser rod. Thus, the mirror is generally disposed at the center of the longitudinal gap between the adjacent solid laser rods, i.e., at the position of the smallest diameter of the emitted laser beam and thus a highest laser density. The highest laser density may cause a thermal damage on the mirror surface.

Further, the solid laser device described in the two publications cannot solve the problem of the insufficient rigidity of the base, and obviate the alignment operation of the optical axis of the solid laser device by moving the condensers.

A solid laser device according to the preamble part of the main claim is known from US-A-5,867,519. This solid laser device, however, is pumped by four flash lamps, whereas the solid laser device of the invention is laser pumped.

### SUMMARY OF THE INVENTION

It is an object of the present invention to provide a solid laser device capable of allowing the optical axis of the solid laser rods to be adjusted with ease without moving the condensers, and alleviating the damage of the mirror surface of the return mirror assembly.

This object is solved by the features of the main claim.

Advantageous embodiments are mentioned in the subclaims.

The above and other objects, features and advantages of the present invention will be more apparent from the following description, referring to the accompanying drawings.

### BRIEF DESCRIPTION OF THE DRAWINGS

Fig. 1 is a top plan view of a solid laser device according to a first embodiment of the present invention.
Fig. 2 is an enlarged partial longitudinal-sectional view of the solid laser device of Fig. 1, showing a coupling portion between the rod support and the solid laser rod.
Fig. 3 is an enlarged partial longitudinal-sectional view of the solid laser rod in the solid laser device of Fig. 1.
Fig. 4 is a cross-sectional view of the solid laser rod and associated semiconductor laser diodes in the solid laser device of Fig. 1.
Fig. 5 is a top plan view of a solid laser device according to a second embodiment of the present invention.
Fig. 6 is a top plan view of a solid laser device according to a third embodiment of the present invention
Fig. 7 is a sectional view of the rod support in the third embodiment.
Fig. 8 is a sectional view of the rod support in a first modification from the third embodiment.
Fig. 9 is a sectional view of the rod support in a second modification from the third embodiment.
Fig. 10 is a top plan view of a solid laser device according to a fourth embodiment of the present invention.
Fig. 11 is a top plan view of a solid laser device according to a fifth embodiment of the present invention.
Fig. 12 is a top plan view of a solid laser device according to a sixth embodiment of the present invention.
Fig. 13 is a top plan view of a solid laser device according to a seventh embodiment of the present invention.
Fig. 14 is a top plan view of a solid laser device according to an eighth embodiment of the present invention.
Fig. 15 is a cross-sectional view of the condensers in a solid laser device according to a ninth embodiment of the present invention.
Fig. 16 is a cross-sectional view of the condensers in a solid laser device according to a tenth embodiment of the present invention.
Fig. 17 is a sectional view of the block for fixing the laser diodes in the tenth embodiment.
Fig. 18 is an enlarged partial sectional view of the block shown in Fig. 17.
Fig. 19 is a top plan view of a conventional solid laser device.

### PREFERRED EMBODIMENT OF THE INVENTION

Now, the present invention is more specifically described with reference to accompanying drawings, wherein similar constituent elements are designated by similar reference numerals.

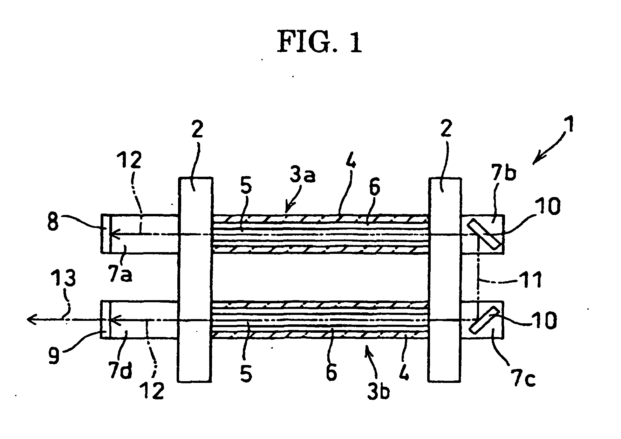

Referring to Fig. 1, a solid laser device, generally designated by numeral 1, according to a first embodiment of the present invention includes a pair of elongate rod supports 2 extending parallel to and disposed apart from one another, a pair of condensers 3a and 3b extending parallel to one another and perpendicular to the extending direction of the rod supports 2. The condensers 3a and 3b are fixed onto the rod supports 2, each of which is made of a single material such as metal, alloy, resin or ceramics.

A cylindrical glass tube 4 is provided in each condenser 3a or 3b, and receives therein a solid laser rod 5. It is to be noted that the term "condenser" means a composite structure including a transparent tube (glass tube) 4 and a solid laser rod 5. The axis of the glass tube 4 is aligned with the optical axis of the solid laser rod 5, and the longitudinal ends of the glass tube 4 and the solid laser rods 5 are supported by the rod supports 2. The solid laser rod 5 is a YAG rod, for example. Cooling water 6 flows through the gap between the inner wall of the glass tube 4 and the outer wall of the solid laser rod 5. The cooling water 6 is supplied by a pump (not show) and a pipeline (not shown) provided outside the solid laser device 1, and may be de-ionized water, for example.

The rod support 2 is attached with holders 7a to 7d, which are aligned with the optical axes of the solid laser rods 5 and oppose the condensers 3a and 3b, with the rod supports 2 disposed therebetween. Holders 7a and 7d are supported on the common rod support 2, whereas holders 7b and 7c are supported on the common rod support 2. Thus, the two rod supports 2, the two condensers 3a and 3b and four holders 7a to 7d of the solid laser device 1 form a shape of "#".

Holder 7a, shown at the top left side in the drawing, mounts thereon a total-reflection mirror 8, which is disposed on the extension of the optical axis of the solid laser rod 5 of condenser 3a and has a mirror surface perpendicular to the axis. Holder 7d, shown at the bottom left side, mounts thereon a partial-reflection mirror 9, which is disposed on the extension of the optical axis of the solid laser rod 5 of condenser 3b and has a mirror surface perpendicular to the optical axis. Holders 7b and 7c, shown at the right side, mount thereon respective mirrors 10, which constitute a return mirror assembly and are disposed on the extensions of the respective solid laser rods 5 of condensers 3a and 3b. The mirrors 10 have mirror surfaces which are 45 degrees inclined with respect to the optical axes of the respective solid laser rods 5.

In these configurations, the total-reflection mirror 8, solid laser rod 5, the return mirror assembly including two mirrors 10, solid laser rod 5 and partial-reflection mirror 9 are optically coupled together to form an optical path 11. The angles of the mirrors 10 with respect to the optical axes of the solid laser rods 5 can be adjusted as desired. A multilayer high reflection coat formed on the total-reflection mirror 8 is optimized to a direction of 0 degrees for the reflected laser with respect to the mirror surface, whereas the multilayer high reflection coat formed on the mirror 10 of the return mirror assembly is optimized to 45 degrees for the reflected laser.

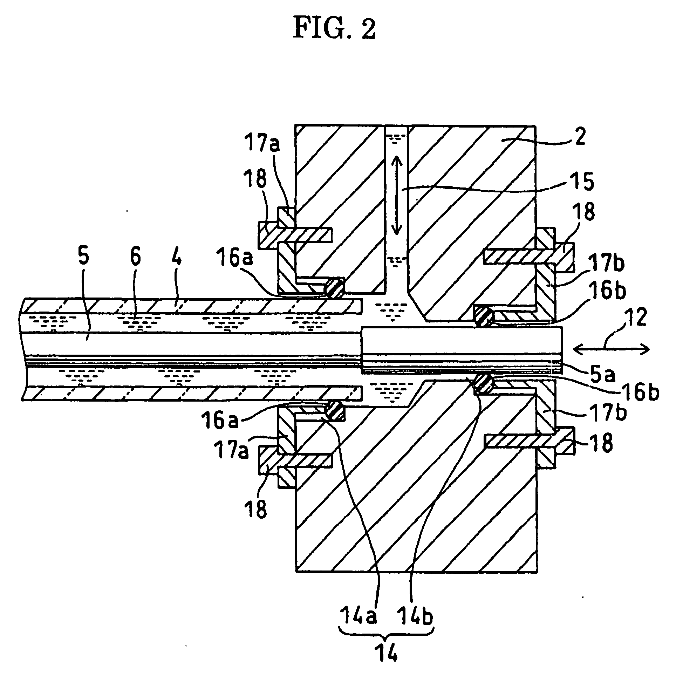

Fig. 2 is a sectional view taken along the optical axis of the solid laser rod 5 and perpendicular to the extending direction of the rod support 2, showing the coupling portion of the rod support 2 and the solid laser rod 5. The rod support 2 has therein a pair of through-holes 14 extending along the optical axes of the solid laser rods 5. The through-hole 14 has a first portion 14a having an opening directed to the side of the solid laser rod 5, and a second portion 14b having an opening directed to the opposite side, wherein the first portion 14a has a larger diameter than the second portion 14b. A slot 15 extending perpendicularly to each through-hole 14 is also formed in the rod support 2, communicating the each through-hole 14 to outside the rod support 2.

A rod holder 5a is attached onto the end portion of the solid laser rod 5. The glass tube 4 receiving therein the solid laser rod 5 is inserted in the first portion 14a of the through-hole 14. The rod holder 5a receiving therein the end portion of the solid laser rod 5 is received in the through-hole 14 and exposed from the glass tube 4. The distal end of the rod holder 5a is exposed from the rod support 2. A laser beam 12 is emitted or received through the distal end of the rod holder 5a. Alternatively, the distal end of the rod holder 5a may be received in the through-hole 14.

O-rings 16a and 16b are provided between the glass tube 4 and the rod support 2 and between the rod holder 5a and the rod support 2, respectively. Washers 17a and 17b having an L-shape in cross section are fixed onto the rod support 2 by screws to press the O-rings 16a and 16b, respectively, toward shoulder portions of the rod support 2 within the through-hole 14. The O-rings 17a and 17b seals a channel for the cooling water, which extends from the slot 15 to the internal of the glass tube 4 via the through-hole 14 and allows the cooling water 6 to flow through the gap between the glass tube 4 and the solid laser rod 5. It is to be noted that the central axis of the slot 15 is deviated from the optical axis of the solid laser rod 5 so that the impact of the flowing cooling water 6 onto the solid laser rod 5 is alleviated to thereby suppress the vibration of the solid laser rod 5.

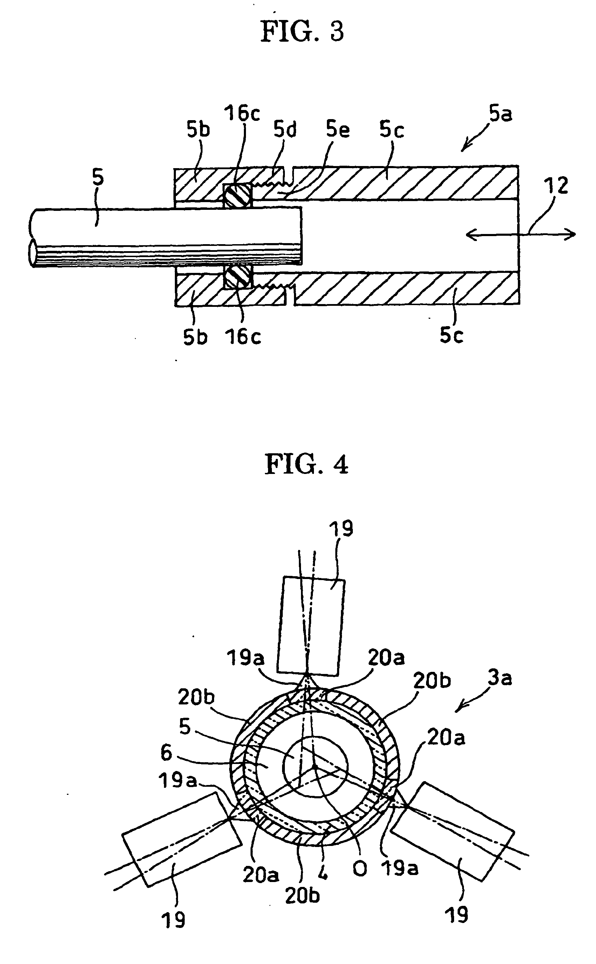

Referring to Fig. 3, the rod holder 5a includes a first tubular section 5b and a second tubular section 5c which are coupled together by means of screwing. More specifically, the end portion 5d of the first tubular section 5b has a thread on the inner surface thereof, whereas the end portion 5e of the second tubular section 5c has a thread on the outer surface thereof, whereby both the tubular sections5b and 5c are coupled together by screwing at the threads. An O-ring 16c is provided on the outer surface of the solid laser rod 5, and is pressed between the end of the second tubular section 5c and a shoulder of the first tubular section 5b to be deformed and thus in a closer contact with the outer surface of the solid laser rod 5.

Referring to Fig. 4, the condenser 3a (or 3b) is provided with a plurality of semiconductor laser diodes (LD devices) 19 in the vicinity thereof. The LD devices 19 are arranged in three rows arranged 120 degrees apart from one another with respect to the center of the solid laser rod 5, each group including a plurality of LD devices 19 arranged parallel to the optical axis of the solid laser rod 5. The LD devices 19 are cooled by cooling water (not shown) flowing around the LD devices 19.

The glass tube 4 is provided with an anti-reflection coat (AR coat) 20a and a high-reflection coat (HR coat) 20b provided on the outer surface of the glass tube 4. Three stripes of the AR coat 20a and three stripes of the HR coat 20b are disposed alternately with one another to extend in the axial direction of the glass tube 4, wherein the three stripes of the AR coat 20a are disposed to correspond to the three rows of the LD devices 19.

The AR coat 20a prevents the pumping laser 19a emitted by the LD device 19 from being reflected by the outer surface of the glass tube 4 to improve the transmittance of the pumping laser 19a through the glass tube 4. The HR coat 20b reflects the pumping laser toward the internal of the glass tube 4 to thereby confine the pumping laser within the glass tube 4. This allows the pumping laser to have a uniform distribution within the glass tube 4. Each of the AR coat 20a and the HR coat 20b is formed as a multilayer film including a plurality of insulator layers. The optical axis of the LD device 19 is deviated from the central axis "O" of the solid laser rod 5 as illustrated by chain lines in Fig. 4, whereby the pumping laser 19a passes at a location deviated from the optical axis of the solid laser rod 5.

Exemplified practical configurations of the solid laser device of the present embodiment are as follows: the partial-reflection mirror 9 has a transmittance of 20 to 80 percents; the solid laser rod 5 has a diameter of 4 to 8mm and has an output power efficiency of 40 percents; each of the condensers 3a and 3b has a length of 200mm; the LD device 19 has a length of 10mm; the LD device has an output power of 20 to 100 watts, e.g., 60 watts and an output power efficiency of 40 percents; and several tens of LD device 19 are provided for each of the solid laser rods 5 in the solid laser device.

The wavelength of the pumping laser 19a is selected at an optimum wavelength based on the material of the solid laser rod 5. For example, for a neodymium YAG solid laser rod 5, the wavelength of the pumping laser 19a is 808nm (infrared ray), which provides 1064nm (far infrared ray) for the wavelength of the resultant laser beam 12. The solid laser device 1 of the present embodiment may be used in a laser welder for welding a metal, a laser cutter etc.

In operation of the solid laser device 1 of the present embodiment, as shown in Fig. 4, the LD devices 19 emit pumping laser 19a to the solid laser rod 5. The pumping laser 19a passes the AR coat 20a, glass tube 4 and cooling water 6 to reach the solid laser rod 5. The pumping laser 19a enters the solid laser rod 5 while being deviated from the central axis thereof to pump the solid laser rod 5, and passes the solid laser rod 5, cooling water 6 and glass tube 4 to reach the HR coat 20b. The pumping laser is reflected by the HR coat 20b toward the internal of the glass tube 4 to enter the solid laser rod 5 again, whereby the solid laser rod 5 is pumped for lasing to generate laser.

As illustrated in Fig. 1, the laser generated in the solid laser rods 5 is amplified for lasing in the optical path 11 between the total-reflection mirror 8 and the partial-reflection mirror 9 to form a laser beam 12. A part of the laser beam 12 thus obtained is emitted through the partial-reflection mirror 9 as an output laser beam 13.

In the operation as described above, the cooling water 6 is supplied by a pump and an associated pipeline to the channel including the slot 15 of one of the rod supports 2, as shown in Fig. 2. The cooling water 6 pass the through-hole 14 to be supplied to the gap between the glass tube 4 and the solid laser rod 5 to cool the condensers 3a or 3b. The cooling water 6 passed by the gap between the glass tube 4 and the solid laser rod 5 then passes the through-hole 14 and the slot 15 formed in the other rod support 2 to return to the pump. The LD devices 19 are cooled by cooling water flowing through another channel.

In the solid laser device 1 of the present embodiment, the two condensers 3a and 3b disposed side by side allow the solid laser device 1 to have a smaller length roughly equal to 1/2 of the conventional solid laser device 101 having linearly arranged condensers. This allows the laser apparatus mounting thereon the solid laser device 1 to have a smaller dimension.

In addition, since the two condensers 3a and 3b are supported by the common rod supports 2, the solid laser device 1 has a higher rigidity. The higher rigidity alleviates misalignment of the optical axis in the solid laser device, which may result from the vibration and temperature fluctuation applied from outside the device 1 in combination with mass of the condensers and aged deterioration of the device 1, thereby achieving a stable lasing operation.

The plurality (two in this embodiment) of mirrors 10 disposed between the adjacent solid laser rods 5 in the optical path allow the misalignment of the optical axis between the solid laser rods 5, if any, due to a wrong positioning to be corrected merely by adjusting the angles of the mirror surface with respect to the optical axes of the solid laser rods 5, without moving the solid laser rods 5. Adjustment of the angle of the mirrors affords a fine adjustment of the optical axis to stabilize the output power of the solid laser device. It is to be noted that a single mirror disposed between adjacent solid laser rods, such as used in JP-A-1989-86580, can hardly couple the optical axes with a high accuracy if both the optical axes of the solid laser rods extend parallel to or are twisted from one another after reflection by the mirror. In such a case, at least one of the solid laser rods must be moved for the alignment, and thereby complicates the alignment operation.

In addition, if the solid laser rod 5 is failed for some reason, the failed solid laser rod 5 can be replaced by another solid laser rod by moving the solid laser rods 5 in the longitudinal direction thereof after removing the mirror 10. This affords an easy maintenance of the solid laser device 1. It is to be noted that the solid laser rod 5 is hardly removed by moving the same in the direction other than the longitudinal direction because the O-rings and pipeline for the cooling water obstacles the movement. In this view point, the solid laser rod in the conventional solid laser device of Fig. 19 can be removed in the direction other than the longitudinal direction only by removing the condenser as a whole. After replacing the solid laser rod within the glass tube in the conventional solid laser device, the condenser is mounted on the solid laser device, followed by aligning the optical axis of the condenser with the optical axis of the solid laser device. This complicates the maintenance operation of the solid laser device.

Further, the compact arrangement of the condensers 3 in the present embodiment allows a simple structure of the pipeline for the cooling water 6 and reduces the distance between the pump and the condensers 3. Thus, a pressure drop can be reduced in the pipeline. The reduced pressure drop stabilizes the flow rate of the cooling water, thereby stabilizing the operation of the solid laser device.

The configuration of the common rod supports 2 for the two condensers 3a and 3b reduces the number of components of the solid laser device 1, thereby reducing the cost thereof.

Since the mirror 10 is located nearer to the end of the solid laser rod 5 than the central point of the optical path between the adjacent solid laser rods 5, the diameter of the laser beam on the mirror surface is larger than the diameter on the central point, thereby reducing the optical density on the mirror surface. This alleviates the thermal damage on the mirror surface.

In general, the LD devices associated with the pipelines for the cooling water are arranged around the solid laser rod in five rows or more. The dimensions of the LD device and associated pipelines are relatively large compared to the diameter of the solid laser rod, and thus it is difficult to locate the LD device in the near vicinity of the solid laser rod. In addition, the larger distance between the solid laser device and the LD device as well as a larger divergent angle of the laser beam emitted by the LD device necessitates an optical component such as a focusing lens disposed between the LD device and the solid laser rod, which complicates the peripheral structure of the solid laser device. The complicated peripheral structure may involve a larger distance between two solid laser rods juxtaposed with one another.

The larger distance between the adjacent solid laser rods increases the length of the optical path between the adjacent solid laser rods, thereby increasing the diameter of the laser beam at the receiving end of a succeeding one of the adjacent solid laser rods. This reduces the optical coupling efficiency between the solid laser rods, whereby it may be considered that the juxtaposed solid laser rods may suffer from the reduced optical coupling efficiency.

However, as described before, the solid laser rod in the present embodiment is associated with only three rows of LD devices, and thus the distance between the LD devices and the solid laser rod can be reduced compared to the above general solid laser device. For this purpose, LD devices used in the present embodiment have a larger output power, and the solid laser device of the present embodiment need not use the optical component such as a lens between the LD device and the solid laser rod.

The HR coat formed on the glass tube allows the laser beam passed by the solid laser rod to be reflected toward the solid laser device and reused for pumping the solid laser rod. Thus, other focusing means or reflection means need not be provided.

In the solid laser device of the present embodiment, the diameter of the structure including the condenser and the LD devices is reduced down to 1/3 of the diameter of the structure of the general solid laser device, thereby reducing the optical path length between the solid laser rods.

Although a lens may be used in the optical path between the juxtaposed solid laser devices for reducing the diameter of the laser beam instead of reducing the optical path, the use of the lens complicates the structure of the solid laser device. In addition, since the characteristics of the solid laser rods are changed by the aging deterioration thereof, the consistency or matching between the lens and the solid laser rod will be lost after a long-time operation of the solid laser rod.

The structure of the optical axis of the LD device deviating from the optical axis of the solid laser rod affords a uniform distribution of the pumping laser 19a and alleviates the thermal lens effect of the solid laser rod. However, the optical axis of the LD device may pass the optical axis of the solid laser rod 2 instead. In this case, the output power efficiency of the solid laser device can be improved, although the ununiformity of the laser distribution caused thereby increases the thermal lens effect of the solid laser rod.

The cooling water 6 flowing within the rod supports 2 maintains the rod supports 2 at a constant temperature. The constant temperature of the rod supports 2 in turn maintains the total-reflection mirror 8, partial-reflection mirror 9 and mirrors 10 mounted on the holders 7a to 7d, which are supported by the rod supports 2, at a constant temperature. This obviates use of a cooling means for cooling these mirrors.

The solid laser rod may be made of GdVO₄, YVO₄, GSGG, GGG, YLF, glass, and ceramics instead of YAG. The cooling water may be an anti-freeze solution wherein de-ionized water is added with ethylene glycol. Use of the anti-freeze solution improves the cooling efficiency for the solid laser rod 5. The number of rows of LD devices may be selected as desired, e.g., at 2 or 4, so long as the pumping laser can be incident onto the solid laser rod to maintain the desired output power of the solid laser rod.

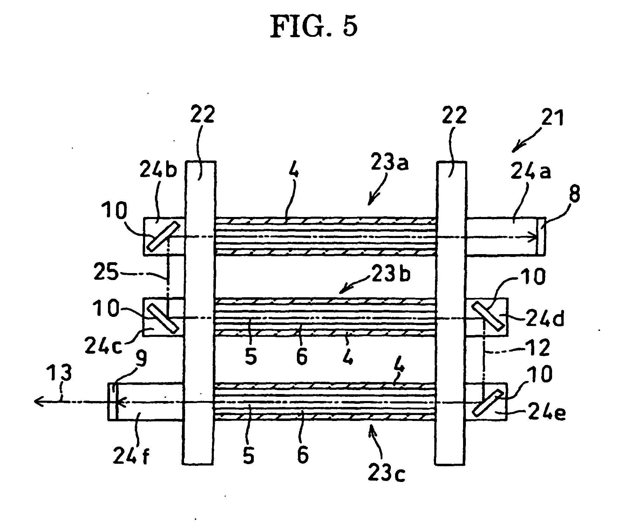

Referring to Fig. 5, a solid laser device, generally designated by numeral 21, according to a second embodiment of the present invention includes a pair of rod supports 22 and three condensers 23a to 23c supported on the common rod supports 22 and juxtaposed with one another. The optical axes of the solid laser rods 5 in the respective condensers 23a to 23c reside on a common plane and extend parallel to one another. Holders 24a to 24f are attached onto the rod supports 2, wherein holders 24a and 24b are disposed on the extensions of the axis of condenser 23a, holders 24c and 24d on the extensions of the axis of condenser 23b, and holders 24e and 24f on the extensions of the axis of condenser 23c. Holders 24a, 24d and 24e are mounted on one of the rod supports 22, whereas holders 24b, 24c and 24f are mounted on the other of the rod supports 22. The structure of condensers 23a to 23c is similar to the structure of the condensers 3a and 3b in the first embodiment.

Holder 24a mounts thereon a total-reflection mirror 8, holders 24b to 24e mount thereon respective mirrors 10, and holder 24f mounts thereon a partial-reflection mirror 9. Thus, the total-reflection mirror 8, condenser 23a, two mirrors 10, condenser 23b, two mirrors 10, condenser 23c and partial-reflection mirror 9 are optically coupled together in series to form an optical path 25. The configuration and the function of the solid laser device 21 other than the above-described structure are similar to the configuration and the function of the solid laser device 1 of the first embodiment.

In the present embodiment, three condensers 23a to 23c coupled together in series have a higher output power compared to the solid laser device of the first embodiment, and has a length substantially equal to 1/3 of the conventional solid laser device having a similar output power.

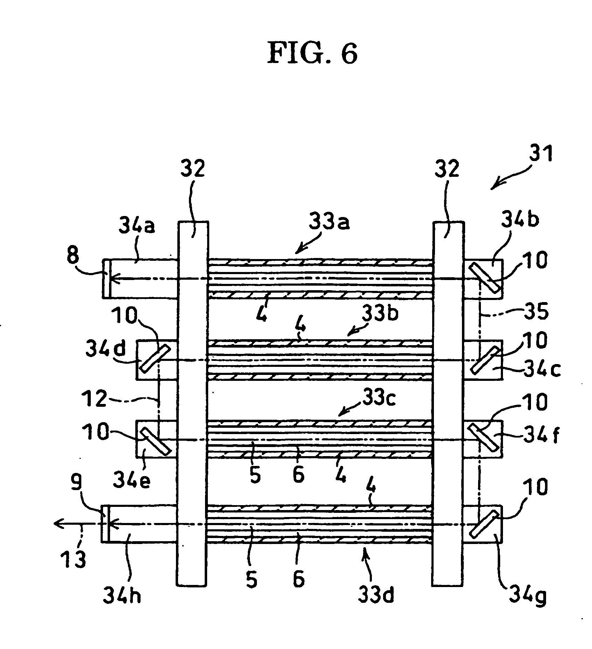

Referring to Fig. 6, a solid laser device, generally designated by numeral 31, according to a third embodiment of the present invention includes a pair of rod supports 32 and four condensers 33a to 33d supported on the common rod supports 32 and juxtaposed with one another.

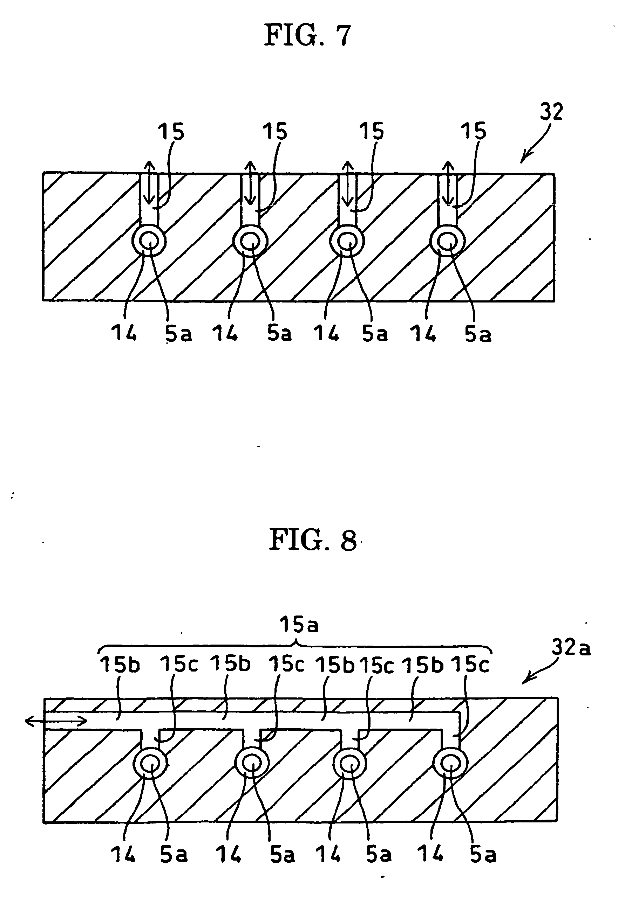

Referring to Fig. 7 showing a sectional view of the rod support 32 taken perpendicular to the optical axis of the condenser 33a, the rod support 32 has four through-holes 14 corresponding to the four condensers 33a to 33d. The through-holes 14 are arranged in a row at a constant pitch. The through-holes 14 are communicated to outside the rod support 32 via respective slots 15, whereby the cooling water is supplied through the slots 15 and through-holes 14 to the respective solid laser rods 5 independently of one another.

In the present embodiment, four condensers 33a to 33d coupled together in series have a higher output power compared to the solid laser device of the second embodiment, and has a length substantially equal to 1/4 of the conventional solid laser device having a similar output power. The number of the condensers coupled in series in the present invention may be five or more. The structure and function of the solid laser device 31 of the present embodiment other than the structure and function recited herein are similar to the structures and functions of the solid laser device 21 of the first and second embodiments.

Referring to Fig. 8, a first modification from the third embodiment is such that the channel 15a for the cooling water in the rod support 32a includes a main slot 15b communicated to outside the rod support 32a and four branch slots 15c coupling the respective through-holes 14 to the main slot 15b.

The rod support 32a of the first modification allows the pipeline of the cooling water to have a simple structure, although the pressure of the cooling water applied to the solid laser rods 5a is less uniform compared to the third embodiment.

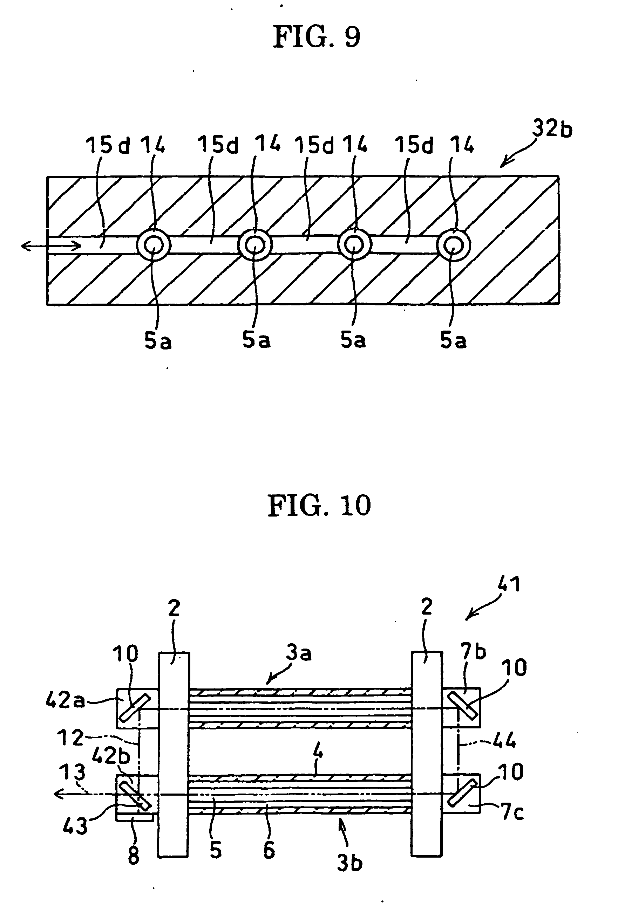

Referring to Fig. 9, a second modification from the third embodiment is such that the channel for the cooling water in the rod support 32b is implemented by a single linear slot 15d coupling the through-holes 14 together. The rod support 32b is easy to fabricate; however, causes a larger ununiformity of the pressure applied to the solid laser rods 5a compared to the first modification.

Referring to Fig. 10, a solid laser device, generally designated by numeral 41, according to a fourth embodiment of the present invention is such the holders 42a and 42b are provided in the present embodiment instead of the holders 7a and 7d, respectively, provided in the first embodiment. Holder 42a mounts thereon a mirror 10, whereas holder 42b mounts thereon a partial-reflection mirror 43 and a total-reflection mirror 8.

The mirror surface of the mirror 10 mounted on holder 42a is 45 degrees inclined with respect to the optical axis of condenser 3a and is 45 degrees inclined with respect to the optical path between the mirror 10 on holder 42a and the partial-reflection mirror 43. The mirror surface of the partial-reflection mirror 43 mounted on holder 42b is 45 degrees inclined with respect to the optical axis of condenser 3b, and is 45 degrees inclined with respect to the optical path between the mirror 10 on holder 42a and the partial-reflection mirror 43. The total-reflection mirror 8 is disposed on the extension of the optical path between the mirror 10 on holder 42a and the partial-reflection mirror 9 outside the partial reflection mirror 9. The mirror surface of the total-reflection mirror 8 is perpendicular to the optical path between the mirror 10 on holder 42a and the partial-reflection mirror 43. Thus, the mirror 10 on holder 42a, condenser 3a, mirror 10 on holder 7b, mirror 10 on holder 7c, condenser 3b and the partial-reflection mirror 43 form a loop (closed) optical path 44. The total-reflection mirror 8 reflects the laser passed by the partial-reflection mirror 43 to the partial-reflection mirror 43. The angles of the mirror surfaces of the mirror 10 and the partial-reflection mirror 8 can be adjusted as desired.

In operation, LD devices emit pumping laser to the solid laser rods 5, which are pumped to generate laser 12 in the closed optical path 44. A part of the laser 12 reflected by the mirror 10 on holder 42a and incident onto the partial-reflection mirror 43 is reflected by the partial reflection mirror 43 to advance toward condenser 3b. This part of the laser advances within the closed optical path 44 in the counter-clockwise direction from condenser 3b, mirror 10 on holder 7c, mirror 10 on holder 7b, and condenser 3a to mirror 10 on holder 42a. A part of the laser reflected by the mirror 10 on holder 42a and incident onto the partial-reflection mirror 43 behaves as described above.

The remaining part of the laser reflected by the mirror 10 on holder 42a and incident onto the partial-reflection mirror 43 passes through the partial-reflection mirror 43 to be reflected by the total-reflection mirror 8. A part of the laser reflected by the total-reflection mirror 8 passes through the partial-reflection mirror 43 to advances within the closed optical path 44 in the clockwise direction. The remaining part of the laser reflected by the total-reflection mirror 8 is reflected by the partial-reflection mirror 43 to be emitted as the output laser beam 13 of the solid laser device 41.

In general, the laser passing through the condenser is subjected to a variety of aberrations and distortions of the solid laser rod in the condenser, and thus deteriorated in the optical property thereof each time the laser passes through the condenser. In the conventional solid laser device 101 of Fig. 19, the laser passes through all the condensers 103 twice before the laser reaches the original position from which the laser advanced. On the other hand, in the solid laser device 41 of the present embodiment, the laser passes all the condensers 3a and 3b only once before the laser reaches the original position from which the laser advanced, due to the closed optical path 44. Thus, the deterioration of the output laser beam caused by the aberrations and distortions of the solid laser rod in the present embodiment is half the deterioration in the conventional solid laser device, thereby improving the optical property of the output laser beam 13 in the present embodiment.

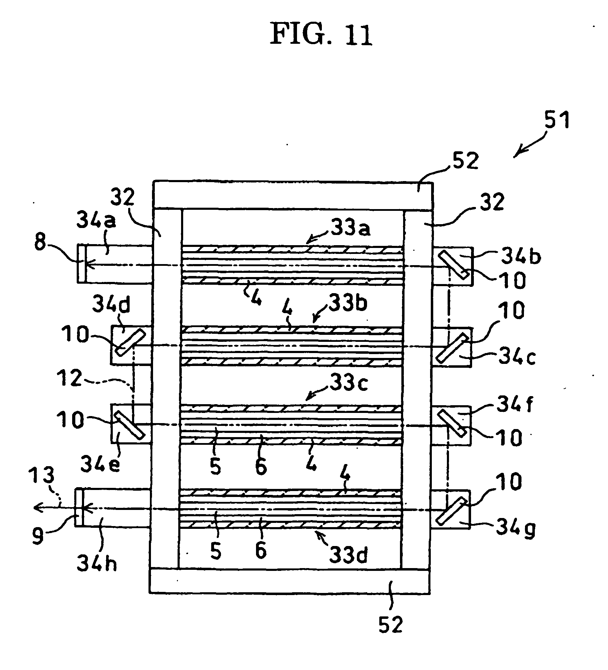

Referring to Fig. 11, a solid laser device, generally designated by numeral 51, according to a fifth embodiment of the present invention is similar to the third embodiment except for the configuration of the rod supports. More specifically, the rod supports 32 are mechanically coupled together in the present embodiment by a pair of coupling bars 52 at the ends of both the rod supports 32 to form a unified rod support structure in the rod support assembly. This configuration of the rod support assembly enhances the rigidity of the solid laser device 51 of the present embodiment.

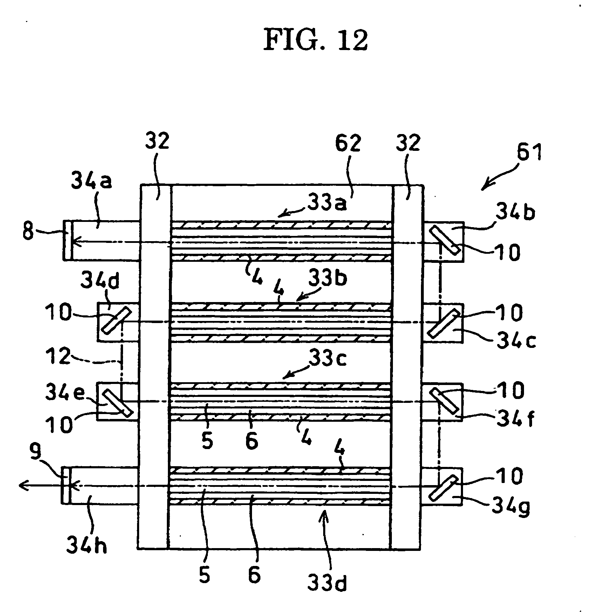

Referring to Fig. 12, a solid laser device, generally designated by numeral 61, according to a sixth embodiment of the present invention is similar to the third embodiment except for the configuration of the rod supports. More specifically, the rod supports 32 are mechanically coupled together in the present embodiment by a coupling board 62 to form a unified rod support structure in the rod support assembly. This unified rod support structure more enhances the rigidity of the solid laser device 51 of the present embodiment over the fifth embodiment.

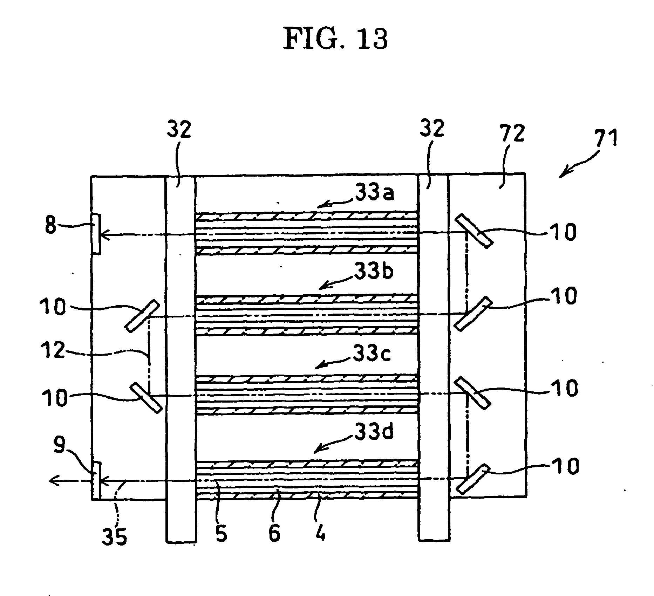

Referring to Fig. 13, a solid laser device, generally designated by numeral 71, according to a seventh embodiment of the present invention is similar to the sixth embodiment except for the configuration of the coupling board. More specifically, the coupling board 72 in the present embodiment has an extension extending outwardly from each rod support 32. The extension of the coupling board 72 mounts thereon the total-reflection mirror 8, partial-reflection mirror 9 and six mirrors 10. The extension obviates provision of the holders 34a to 34g in Fig. 12.

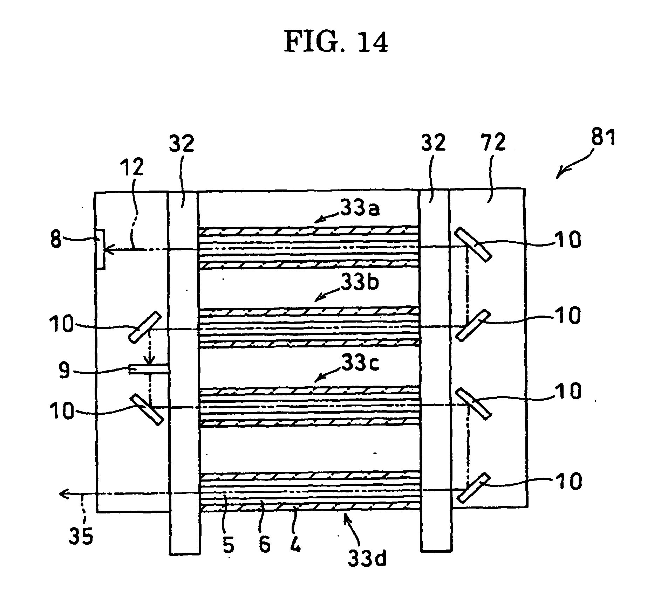

Referring to Fig. 14, a solid laser device, generally designated by numeral 81, according to an eighth embodiment of the present invention is similar to the seventh embodiment except for the arrangement of the partial-reflection mirror 9. More specifically, the partial-reflection mirror 9 is disposed roughly at the center of the optical path 35 between condenser 33b and condenser 33b, instead of the end of the whole optical path 35. It is to be noted that LD devices are provided for each of the condensers 33a to 33d around them.

In the present embodiment, two preceding-stage condensers 33a and 33b excite the laser, whereas two succeeding-stage condensers 33c and 33d amplify the excited laser. In this configuration, since condensers 33c and 33d need not allow the laser to advance in opposite directions, the allowable margin for the misalignment of the optical axes of condensers 33c and 33d is increased, facilitating the alignment operation for the optical axes even if a larger number of condensers are linearly coupled in series. In the present embodiment, the total-reflection mirror 8 and the partial-reflection mirror 9 must sandwich therebetween at least one solid laser rod 5.

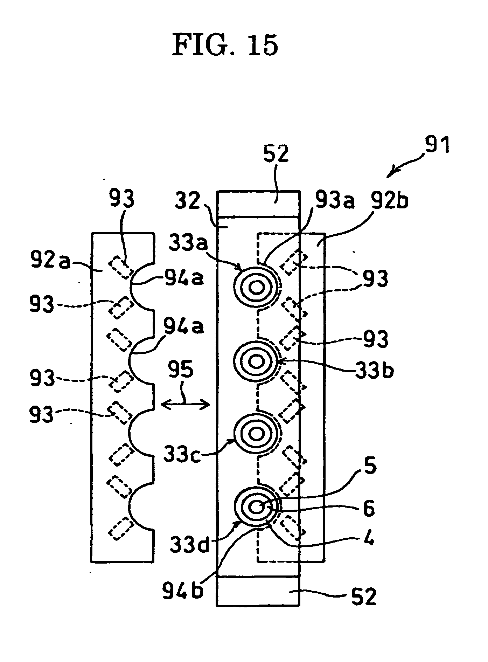

Referring to Fig. 15, a solid laser device, generally designated by numeral 91, according to a ninth embodiment of the present invention is similar to the fifth embodiment except for the configuration of the support block for fixing the LD devices with respect to the condensers. More specifically, the support block (92a and 92b) is disposed between the rod supports 32, and includes a block half 92a and a block half 92b, on which a plurality of LD devices 93 are fixed. The block halves 92a and 92b have semi-cylindrical grooves 94a and 94b, respectively, which are coupled together to form cylindrical grooves and receive therein respective condensers 33a to 33d.

A plurality (four) of rows of LD devices 93 are arranged at a constant angular pitch of 90 degrees with respect to the center of each semicircular groove 94a or 94b by using the support blocks, each row including ten LD devices 93, for example, arranged in the direction parallel to the optical axis of the condensers 33a to 33d. Block half 92a is moved in the direction of arrow 95 with respect to block half 92b to fix or release the LD devices 93 to/from the condensers 33a to 33d. This configuration allows a failed LD device to be replaced by another LD device with ease, thereby simplifying the maintenance operation of the solid laser device 91.

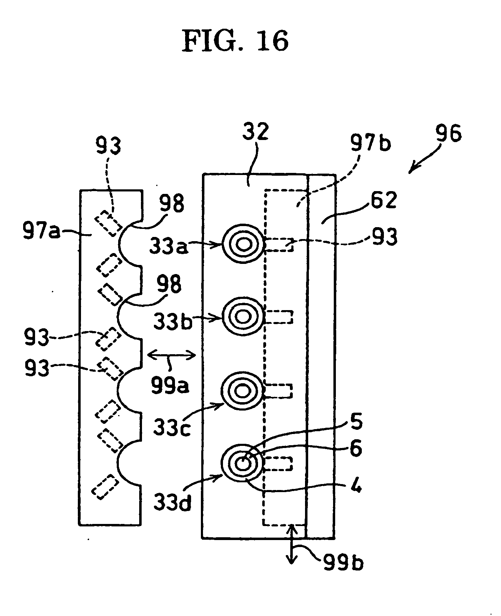

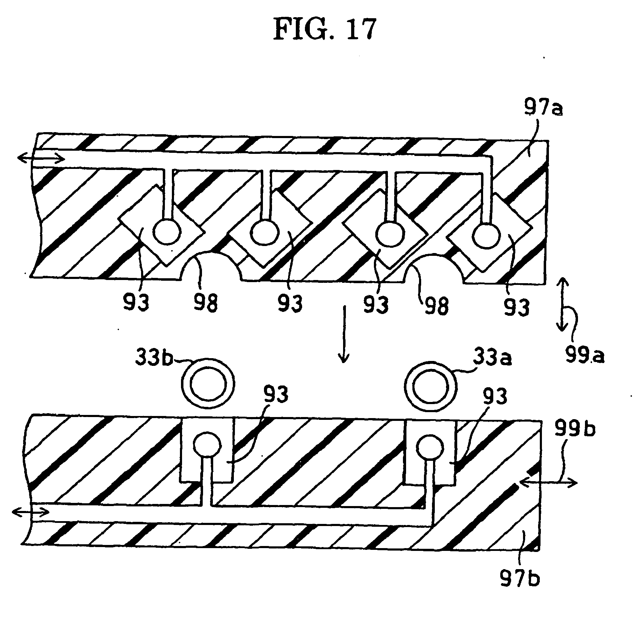

Figs. 16 to 18 show the structure of the support block for fixing LD devices onto the condensers 33a to 33d in a solid laser device 96 according to a tenth embodiment of the present invention. Figs. 16 and 17 are sectional views taken perpendicular to the optical axis of the condensers 33a to 33d, whereas Fig. 18 is a sectional view taken along the optical axis of the condenser. It is to be noted that although only three LD devices 93 are depicted in Fig. 18, a larger number of LD devices are provided therein as a row of the LD devices.

The solid laser device 96 of the present embodiment is roughly similar to the sixth embodiment except for provision of the support bock in the present embodiment. In Figs. 16 and 17, the support block includes a block half 97a and a block half 97b, onto which the LD devices 93 are fixed. A coupling board 62 is provided for coupling support blocks together for improving the rigidity of the solid laser device 96 over the ninth embodiment.

Block half 97a has a plurality of semi-cylindrical groove 98 for receiving therein respective condensers 33a to 33d, whereas block half 97b has a flat surface for fixing the condensers 33a to 33d thereon. Block halves 97a and 97b are coupled together to fix the LD devices 93 with respect to the condensers 33a to 33d, which are received in the semi-cylindrical grooves 98. Block half 97a is moved in the direction of arrow 99a with respect to block half 97b to fix or release the LD devices 93 onto the condensers 33a to 33d. Block half 97b is moved in the direction of arrow 99b with respect to the condensers 33a and 33b, for installing or removing block half 97b in the solid laser device 96.

As shown in Fig. 18, block half 97a is provided with an inlet part 100a and an outlet part 100b for supplying the cooling water at one of the longitudinal ends of block half 97a. The inlet part 100a and the outlet part 100b are made of acrylic resin, for example, within which channels are formed. Between the inlet part 100a and the outlet part 100b, there are provided ten LD modules 100c, although only three are depicted therein, which are arranged in a row along the longitudinal direction of the condenser. Each LD module 100c receives therein a single LD device 93. The mere arrangement of the LD modules 100c forms a channel between the inlet part 100a and the outlet part 100b. The channel allows the cooling water to flow from the inlet part 100a to the outlet part 100b thereby cooling the LD devices 93. Two rows of the LD devices 93 are provided on block half 97a for each of the condensers 33a to 33d, whereas a single row of the LD devices 93 is provided on block half 97b for each of the condensers 33a to 33d, as illustrated in Fig. 16.

A failed LD device can be replaced by another LD device by removing block half 97a or 97b from the condensers, thereby facilitating the maintenance operation of the solid laser device. By arranging the LD modules 100c having a channel section therein in the longitudinal direction, a channel for the cooling water can be formed with ease, thereby simplifying the structure and the fabrication process of the solid laser device.

Since the above embodiments are described only for examples, the present invention is not limited to the above embodiments and various modifications or alterations can be easily made therefrom by those skilled in the art without departing from the scope of the present invention

## Claims

1. A laser-pumped solid laser device comprising: a plurality of solid laser rods (5) having optical axes extending substantially parallel to one another; a plurality of groups of pumping devices (19) disposed for each of said solid laser rods (5), each of said groups including at least one pumping device (19) adapted to pumping a corresponding one of said solid laser rods (5); a total-reflection mirror (8) disposed on an extension of said optical axis of one of said solid laser rods (5); and a partial-reflection mirror (9) disposed on an extension of said optical axis of said one or another of said solid laser rods (5); a return mirror assembly (10) adapted to coupling together said optical axes of said plurality of solid laser rods (5) in series to form an optical path (11); and a rod support assembly;
**characterized in that** said rod support assembly includes a pair of rod supports (2), wherein each of the plurality of solid laser rods (5) are supported by the pair of rod supports at both longitudinal end portions thereof, and
wherein said return mirror assembly consists of a pair of separated return mirrors (10) between each adjacent two of said solid laser rods (5) in said optical path, each of said return mirrors (10) having a mirror surface capable of being adjusted with respect to said optical axis of a corresponding one of said solid laser rods (5), and the pumping devices are pumping laser devices.

2. The laser-pumped solid laser device according to claim 1, wherein said rod support assembly further supports said total-reflection mirror, said partial-reflection mirror and said return mirror assembly.

3. The laser-pumped solid laser device according to claim 1, wherein each of said solid laser rods is received in a transparent tube, and each of said pair of rod supports has a channel for supplying a cooling liquid between said transparent tube and said solid laser rod.

4. The laser-pumped solid laser device according to claim 3, wherein said channel includes a through-hole for receiving said transparent tube and said solid laser rod, and a slot for receiving said cooling liquid from outside said laser-pumped solid laser device.

5. The laser-pumped solid laser device according to claim 1, wherein said pair of rod supports (2) are coupled together by means of at least one coupling member (52, 62).

6. The laser-pumped solid laser device according to claim 5, wherein said at least one coupling member includes a pair of coupling members (52), one of said coupling members couples said pair of rod supports (32), at one of lateral ends thereof, and the other of said coupling members (52) couples said pair of rod supports (32) at the other of lateral ends thereof.

7. The laser-pumped solid laser device according to claim 5, wherein said at least one coupling member is a coupling board (62).

8. The laser-pumped solid laser device according to claim 1, wherein said partial-reflection mirror (43) reflects a part of laser output from one of said solid laser rods (5) to a mirror member (10) of said return mirror assembly (10) said mirror member (10) reflecting said part of laser toward another of said solid laser rods (5) to thereby form a loop optical path (44).

9. The laser-pumped solid laser device according to claim 1, further comprising a pumping laser support (92a, 92b) for fixing at least one of said pumping laser devices (93) onto said solid laser rod (33a-33d).

10. The laser-pumped solid laser device according to claim 1, wherein said pumping laser device (19) is a semiconductor laser diode.

11. The laser-pumped solid laser device according to claim 3, wherein said transparent tube (4) includes thereon an anti-reflection coat (20a) for receiving said pumping laser from said pumping laser device (19) toward inside said transparent tube (4), and a reflection coat (20b) for confining said pumping laser within said transparent tube (4).

12. The laser-pumped solid laser device according to claim 1, wherein an optical axis of each of said pumping laser devices (19) is deviated from said optical axis of a corresponding one of said solid laser rods (5).

13. The laser-pumped solid laser device according to claim 1, wherein an optical axis of each of said pumping laser devices (19) passes said optical axis of a corresponding one of said solid laser rods (5).

## Patentansprüche

1. Mit Laser gepumpte Festkörperlaservorrichtung mit:
einer Anzahl von Festkörperlaserstäben (5), deren optische Achsen sich im Wesentlichen parallel zueinander erstrecken;
einer Anzahl von Gruppen von Pumpvorrichtungen (19), die für jeden der Festkörperlaserstäbe (5) angeordnet sind, wobei jede der Gruppen wenigstens eine Pumpvorrichtung (19) aufweist, die so ausgebildet ist, dass sie es entsprechend eine der Festkörperlaserstäbe (5) pumpen kann;
einem Totalreflektionsspiegel (8), der an einer Verlängerung der optischen Achse eines der Festkörperlaserstäbe (5) angeordnet ist; und
einem teilreflektierenden Spiegel (9), der an einer Verlängerung der optischen Achse des einen oder anderen Festkörperlaserstabs (5) angeordnet ist;
einer Rückkehrspiegelbaugruppe (10), die so ausgebildet ist, dass sie die optischen Achsen der in Reihe geschalteten Anzahl von Festkörperlaserstäben (5) zusammenkoppeln kann, um einen optischen Pfad (11) zu bilden; und
einer Stabhaltebaugruppe;
***dadurch gekennzeichnet,* dass** die Stabhaltebaugruppe ein Paar Stabnhalter (2) aufweist, wobei jeder der Anzahl von Festkörperlaserstäben (5) durch das Paar Stabhalter an seinen beiden in Längsrichtung befindlichen Endteilen gehalten wird, und
wobei die Rückkehrspiegelbaugruppe aus einem Paar getrennter Rückkehrspiegel (10) zwischen jeweils benachbarten zwei Festkörperlaserstäben (5) in dem optischen Weg besteht, wobei jeder der Rückkehrspiegel (10) eine Spiegeloberfläche hat, die mit Bezug auf die optische Achse des entsprechenden einen Festkörperlaserstabs (5) eingestellt werden kann, und wobei die Pumpvorrichtungen die Laservorrichtungen pumpen.

2. Mit Laser gepumpte Festkörperlaservorrichtung nach Anspruch 1, wobei die Stabhaltebaugruppe ferner den Totalreflektionsspiegel, den teilreflektierenden Spiegel und die Rückkehrspiegelbaugruppe hält.

3. Mit Laser gepumpte Festkörperlaservorrichtung nach Anspruch 1, wobei jede der Festkörperlaserstäbe in einem transparenten Rohr aufgenommen ist und jeder des Paares Stabhalter einen Kanal aufweist, um zwischen das transparente Rohr und den Festkörperlaserstab eine Kühlflüssigkeit zuzuführen.

4. Mit Laser gepumpte Festkörperlaservorrichtung nach Anspruch 3, wobei der Kanal ein Durchgangsloch zur Aufnahme des transparenten Rohrs und des Festkörperlaserstabs, und einen Schlitz zur Aufnahme der Kühlflüssigkeit von außerhalb der mit Laser gepumpten Festkörperlaservorrichtung aufweist.

5. Mit Laser gepumpte Festkörperlaservorrichtung nach Anspruch 1, wobei das Paar Stabhalter (2) mittels wenigstens einem Kupplungselement (52, 62) verbunden ist.

6. Mit Laser gepumpte Festkörperlaservorrichtung nach Anspruch 5, wobei das wenigstens eine Kupplungselement ein Paar Kupplungselemente (52) aufweist, wobei eines der Kupplungselemente das Paar Stabhalter (32) an einem deren seitlicher Enden und das andere der Kupplungselemente (52) das Paar der Stabhalter (32) an dem anderen der seitlichen Enden desselben koppelt.

7. Mit Laser gepumpte Festkörperlaservorrichtung nach Anspruch 5, wobei wenigstens ein Kupplungselement eine Kupplungsplatte (62) ist.

8. Mit Laser gepumpte Festkörperlaservorrichtung nach Anspruch 1, wobei der teilreflektierende Spiegel (43) einen Teil des Laserstrahls, der an einem der Festkörperlaserstäbe (5) austritt, auf ein Spiegelelement (10) der Rückkehrspiegelbaugruppe (10) reflektiert, wobei das Spiegelelement (10) diesen Teil des Lasers auf einen anderen der Festkörperlaserstäbe (5) reflektiert, um dadurch einen schleifenförmigen optischen Weg (44) zu bilden.

9. Mit Laser gepumpte Festkörperlaservorrichtung nach Anspruch 1, weiterhin mit einer Pumplaserhalterung (92a, 92b) zur Befestigung von wenigstens einer der Pumplaservorrichtungen (93) an dem Festkörperlaserstab (33a bis 33d).

10. Mit Laser gepumpte Festkörperlaservorrichtung nach Anspruch 1, wobei die Pumplaservorrichtung (19) eine Halbleiterlaserdiode ist.

11. Mit Laser gepumpte Festkörperlaservorrichtung nach Anspruch 3, wobei das transparente Rohr (4) eine Antireflektionsbeschichtung (20a) aufweist, um den Pumplaser von der Pumplaservorrichtung (19) nach innerhalb des transparenten Rohres (4) zu empfangen, und eine Reflektionsschicht (20b) aufweist, um den Pumplaser innerhalb des transparenten Rohres (4) einzuschließen.

12. Mit Laser gepumpte Festkörperlaservorrichtung nach Anspruch 1, wobei die optische Achse jeder der Pumplaservorrichtungen (19) von der optischen Achse eines entsprechenden einen Festkörperlaserstabs (5) abweicht.

13. Mit Laser gepumpte Festkörperlaservorrichtung nach Anspruch 1, wobei die optische Achse jeder der Pumplaservorrichtungen (19) die optische Achse eines entsprechenden einen der Festkörperlaserstäbe (5) passiert.

## Revendications

1. Dispositif laser à solide à pompage par laser comprenant : une pluralité de barreaux laser à solide (5) ayant des axes optiques s'étendant sensiblement parallèlement les uns aux autres ; une pluralité de groupes de dispositifs de pompage (19) disposés pour chacun desdits barreaux laser à solide (5), chacun desdits groupes comprenant au moins un dispositif de pompage (19) adapté pour le pompage d'un barreau correspondant parmi lesdits barreaux laser à solide (5) ; un miroir à réflexion totale (8) disposé sur un prolongement dudit axe optique de l'un desdits barreaux laser à solide (5) ; et un miroir à réflexion partielle (9) disposé sur un prolongement dudit axe optique dudit barreau laser à solide (5) ou d'un autre desdits barreaux laser à solide (5) ; un ensemble de miroirs à retour (10) adapté pour coupler ensemble lesdits axes de ladite pluralité de barreaux laser à solide (5) en série afin de former un chemin optique (11) ; et un ensemble de supports de barreaux ;
**caractérisé en ce que** ledit ensemble de supports de barreaux comprend une paire de supports de barreaux (2), dans lequel chacun de la pluralité de barreaux laser à solide (5) est supporté par la paire de supports de barreaux aux niveau des deux parties d'extrémité longitudinale de celui-ci, et
dans lequel ledit ensemble de miroirs à retour est constitué d'une paire de miroirs à retour séparés (10) entre chaque paire de barreaux adjacents parmi lesdits barreaux laser à solide (5) dans ledit chemin optique, chacun desdits miroirs à retour (10) ayant une surface de miroir apte à être ajustée par rapport audit axe optique d'un barreau correspondant parmi lesdits barreaux laser à solide (5), et les dispositifs de pompage sont des dispositifs laser de pompage.

2. Dispositif laser à solide à pompage par laser selon la revendication 1, dans lequel ledit ensemble de supports de barreaux supporte en outre ledit miroir à réflexion totale, ledit miroir à réflexion partielle et ledit ensemble de miroirs à retour.

3. Dispositif laser à solide à pompage par laser selon la revendication 1, dans lequel chacun desdits barreaux laser à solide est reçu dans un tube transparent, et chacun de ladite paire de supports de barreaux a un canal pour fournir un liquide de refroidissement entre ledit tube transparent et ledit barreau laser à solide.

4. Dispositif laser à solide à pompage par laser selon la revendication 3, dans lequel ledit canal comprend un trou débouchant pour recevoir ledit tube transparent et ledit barreau laser à solide, et une fente pour recevoir ledit liquide de refroidissement depuis l'extérieur dudit dispositif laser à solide à pompage par laser.

5. Dispositif laser à solide à pompage par laser selon la revendication 1, dans lequel ladite paire de supports de barreaux (2) sont couplés ensemble au moyen d'au moins un élément de couplage (52, 62).

6. Dispositif laser à solide à pompage par laser selon la revendication 5, dans lequel ledit au moins un élément de couplage comprend une paire d'éléments de couplage (52), l'un desdits éléments de couplage couple ladite paire de supports de barreaux (32) au niveau de l'une des extrémités latérales de ces derniers, et l'autre desdits éléments de couplage (52) couple ladite paire de supports de barreaux (32) au niveau de l'autre des extrémités de ces derniers.

7. Dispositif laser à solide à pompage par laser selon la revendication 5, dans lequel ledit au moins un élément de couplage est une plaque de couplage (62).

8. Dispositif laser à solide à pompage par laser selon la revendication 1, dans lequel ledit miroir à réflexion partielle (43) réfléchit une partie de la sortie laser de l'un desdits barreaux laser à solide (5) sur un élément de miroir (10) dudit ensemble de miroirs à retour (10), ledit élément de miroir (10) réfléchissant ladite partie de laser vers un autre desdits barreaux laser à solide (5) pour ainsi former un chemin optique en boucle (44).

9. Dispositif laser à solide à pompage par laser selon la revendication 1, comprenant en outre un support laser de pompage (92a, 92b) pour fixer au moins l'un desdits dispositifs laser de pompage (93) sur ledit barreau laser à solide (33a à 33d).

10. Dispositif laser à solide à pompage par laser selon la revendication 1, dans lequel ledit dispositif laser de pompage (19) est une diode laser à semiconducteur.

11. Dispositif laser à solide à pompage par laser selon la revendication 3, dans lequel ledit tube transparent (4) comprend sur lui un revêtement antireflet (20a) pour recevoir ledit laser de pompage depuis ledit dispositif laser de pompage (19) vers l'intérieur dudit tube transparent (4), et un revêtement réfléchissant (20b) pour confiner ledit laser de pompage dans ledit tube transparent (4).

12. Dispositif laser à solide à pompage par laser selon la revendication 1, dans lequel un axe optique de chacun desdits dispositifs laser de pompage (19) est dévié dudit axe optique d'un barreau correspondant parmi lesdits barreaux laser à solide (5).

13. Dispositif laser à solide à pompage par laser selon la revendication 1, dans lequel un axe optique de chacun desdits dispositifs laser de pompage (19) passe par ledit axe optique d'un barreau correspondant parmi lesdits barreaux laser à solide (5).
